# EUROPEAN PATENT SPECIFICATION

(11) **EP 3 389 337 B1**
(45) Date of publication and mention of the grant of the patent: **14.10.2020**
(21) Application number: 18151264.1
(22) Date of filing: 11.01.2018
(51) Int. Cl.: H05B 1/02, H05B 3/34, A41D 19/015, A41D 13/005

(54) **ENERGY-SAVING HEATING WEARABLE COMBINATION**
ENERGIESPARENDE WÄRMENDE TRAGBARE KOMBINATION
ENSEMBLE DE CHAUFFAGE VESTIMENTAIRE À ÉCONOMIE D'ÉNERGIE

(30) Priority: 12.04.2017 TW 106112277
(43) Date of publication of application: 17.10.2018
(73) Proprietor: Carmming International, New Taipei City (TW)
(72) Inventor: CHUNG, Kuo-Hua, New Taipei City (TW)
(74) Representative: 2K Patentanwälte Blasberg Kewitz & Reichel

(56) References cited:
- EP-A1- 2 682 504
- CN-U- 204 169 106
- TW-U- M 532 704
- US-A- 5 148 002
- US-A1- 2001 002 669
- US-A1- 2008 189 826
- US-A1- 2009 289 046
- US-A1- 2012 069 552
- US-A1- 2014 353 300
- US-A1- 2017 086 513

## Description

### BACKGROUND

### Technical Field

The present invention relates to a heating apparatus, and more particularly to an energy-saving heating wearable apparatus for a person who wears the energy-saving heating wearable apparatus to sense an ambient temperature, an ambient humidity, a body temperature of the person, and a body humidity of the person.

### Description of Related Art

In response to cold or snow climate, wearable apparatuses, such as gloves, socks, or scarves with heating mechanisms are used to provide heat sources to help users keep warm. The heating mechanism usually uses a lithium-ion battery and heating elements electrically connected to the lithium-ion battery to generate heat from the heating elements supplied power by the lithium-ion battery.

However, the lithium-ion battery cannot be installed to close to the heating elements due to the problem of manufacturing materials of the lithium-ion battery. In other words, it is usually to maintain a certain safe distance or be isolated between the lithium-ion battery and the heating elements so as to protect the lithium-ion battery, thereby causing disadvantages of excessive installation space, complicated assembly manners, and decentralized heat sources.

CN 204 169 106 U discloses a function coat with a sensor. A sensing device comprises a power supply, a switch, a processor, a warning module, a GPS module, a pedometer, the sensor, an environment sensor, a converter and a cooling and heating system. The power supply is connected with the switch, the processor and a displaying module in sequence. The inductive sensor is connected with the converter. The converter, the warning module, the GPS module, the pedometer and the cooling and heating system are connected with the processor. Through the pedometer and the cooling and heating system, an exerciser can sense moving results via the pedometer, meanwhile, a comfortable exercising space with proper temperature is achieved through the cooling and heating system, proper exercising time is prolonged, a human body sensor and the environment sensor are used, sensed signals are transmitted to the processor after being converted through the converter, when signals are abnormal, the processor starts the warning module to give a warning and the GPS module, and the life health of a user is guaranteed.

US 5 148 002 A discloses a multi-functional garment system including an outer shell garment, detachable inflatable insulation module, detachable heating module, detachable physiological parameter sensors, detachable communication module and detachable control and display module, the control module including environmental parameter sensors. Modularity of these various functional units allows a user to easily configure the garment system as needed for various activities. The control module provides for storing parameter limits and responses to fault conditions which occur when a parameter exceeds the corresponding limit. Stored responses to fault conditions include controlling any of the functional modules thereby providing improved convenience, comfort and safety.

US 2017/086513 A1 discloses a method for fabricating a garment including: applying a first mask to a first side of a fabric substrate coated with a conductive material; applying a second mask-mirrored image of the first mask-to a second side of the fabric substrate opposite the first side; applying an etchant to the fabric substrate to remove conductive material outside of the first mask; arranging a conductive interface pad of a component carrier over an electrode defined by remaining conductive material on the fabric substrate, the component carrier including a flexible substrate and a rigid electrical component mounted to the flexible substrate, the conductive interface pad extending from a terminal of the rigid electrical component across a region of the flexible substrate; mechanically fastening the component carrier to the fabric substrate to form a garment insert including an electrical circuit; and incorporating the garment insert into the garment.

US 2009/289046 A1 discloses a garment assembly including an outer layer selected from any separately manufactured outer layer and a liner covering an inner surface of the outer layer. The inner layer includes a fabric layer, at least one flexible heating element affixed to the fabric layer, a controller electrically connected to the heating element, a portable power supply electrically connected to the controller and the heating elements; electrical leads affixed to the fabric layer to provide an electrical connection between the portable power supply, the controller and the at least one heating element, and at least one closeable pocket for housing the controller and the portable power supply. The present invention further relates to a rechargeable battery pack for seasonal use in a heated garment having at least one battery and battery control circuit having a current drain on said at least one battery maintained within a self-contained housing. The battery further includes a switch located between the battery and battery control circuit operative to, during long periods of non-use, create an open circuit between the battery and the battery control circuit.

EP 2 682 504 A1 discloses a highly functional polyethylene fiber exhibiting reduction of change in their physical properties in a wide range of temperatures for processing for products and in a wide range of temperatures for usage as products, thereby enabling improvement of dimensional stability. In addition, the present invention provides a highly functional polyethylene fiber exhibiting a high degree of dye exhaustion to be obtained in a simple dyeing operation, and excellent color fastness. The highly functional polyethylene fiber of the present invention is characterized in that an intrinsic viscosity is higher than or equal to 0.8 dL/g, and not higher than 4.9 dL/g, ethylene is substantially contained as a repeating unit thereof, and a maximum thermal shrinkage stress is less than or equal to 0.4 cN/dtex in TMA (thermomechanical analysis), and a thermal shrinking percentage at 100°C is less than or equal to 2.5%.

US 2008/189826 A1 discloses an electrically-heated golf mitten formed of a three-layer fabric body that encases the thumb separately and the other four fingers together, and including a cut-and-sewn nylon shell, cut-and-sewn closed cell foam insulator, and cut-and-sewn fleece liner. A battery pack is mounted on the wrist, and a Velcro(TM)-attachable elastic cuff-strap is stretched around the wrist and battery pack for securement and sealing. The battery pack is connected to heating elements attached inwardly of the closed-cell foam insulator. In use, the battery pack and heating elements are designed for relatively high heat, and the three-layer fabric body with sealing cuff-strap is designed for high heat retention. The heated mitten is also very easy to put on and take off. Thus, a golfer dons the mitten for 5 minute intervals between strokes for flash warming of the hands.

US 2001/002669 A1 discloses a soft heater utilizing metal, carbon or conductive ink coated threads, embroidered on, laminated between or woven into a nonconductive substrate to form electrical heating circuits. The heating element may be manufactured in a form of strip, sheet, sleeve or strand of threads for incorporation into plurality of articles. The soft heating element core may contain localized treatment such as positive temperature coefficient (PTC) material for temperature self-limiting control. The electrode conductors are attached to said heating element core which is connected in parallel or in series. The heating element core is shaped in a desired pattern. The whole assembly is sealed by at least one electrically insulated layer which envelopes the strips, sheets, sleeves, ropes or strands of threads.

US 2012/069552 A1 discloses a smart safety glove, wristband, method and kit. In one embodiment, the glove or wristband includes an enclosing shell, a printed circuit board and a light configured to indicate intentions to traffic. In particular embodiments, the glove is in a sleep mode in a substantially horizontal position and the light is illuminated in a substantially vertical position. A method of hand signaling using a smart safety glove includes positioning the smart glove from the substantially horizontal sleep position to a predefined substantially vertical signaling position.

US 2014/353300 A1 discloses an automated local thermal management system including a plurality of heated clothing articles. A first control device with a first microcontroller having a first memory includes a plurality of output drivers each electrically connected to a vehicle power source and to the heated clothing articles for providing an output current to the heated clothing articles. The first control device further includes a Bluetooth transceiver to adjust settings and to monitor operation and a first RF transceiver. A second control device with a second microcontroller having a second memory includes a pair of buttons and an accelerometer and a thermistor and a second RF transceiver for wireless communication with said first RF transceiver. The second memory contains software instructions for monitoring and processing readings from the buttons and the accelerometer and the thermistor for varying the output current in response to changes in readings from the buttons and thermistor and accelerometer.

TW M 532 704 U discloses an intelligent illuminator Integrated with a luminous object, the illuminator being an independent and removable component, comprising a LED light set, a control unit, a rechargeable battery, a switch and a wireless charging module, which are assembled and sealed to form a waterproof, portable and independent illuminator; the control unit configured to control different lighting mode of the LED light set and including a wireless remote control unit, remotely controlled by a light control APP of an intelligent article; wherein the luminous object includes a transparent or semi-transparent block with light-conducting function and a light-conducting groove; the block is a shoe sole, a lamp holder or a box; the illuminator is placed in the light-conducting groove and can be removed or put in at any time, the intelligent illuminator integrated with a luminous object has the advantages of being widely used and convenient for use.

### SUMMARY

An objective of the present invention is to provide a lithium ceramic battery which is not affected by high temperature and is not exploded due to no violent chemical reaction, and a high specific-heat cladding layer is used to be a radiant heat reflective layer to maintain temperature and reduce power consumption by smart controls.

Another objective of the present invention is to provide the lithium ceramic battery to increase the use time and reduce the volume thereof so as to be conveniently applied to a wearable apparatus.

In order to achieve the above-mentioned objectives, the present invention provides an energy-saving heating wearable combination according to claim 1.

An energy-saving heating wearable apparatus is combined with a wearable body and the energy-saving heating wearable apparatus includes a control unit, an explosion-proof power supply unit, a power management unit, a heating unit, a display unit, an input unit, a temperature sensing unit, and a humidity sensing unit. The control unit stores an application program for temperature and humidity determinations. The explosion-proof power supply unit provides the required power to the energy-saving heating wearable apparatus. The power management unit is electrically connected to the control unit and the explosion-proof power supply unit, and the power management unit manages the power of the explosion-proof power supply unit. The heating unit is electrically connected to the control unit and the power management unit. The display unit is electrically connected to the control unit, and the display unit displays control states of the energy-saving heating wearable apparatus. The input unit is electrically connected to the control unit, and the input unit provides operation signals to the control unit. The temperature sensing unit is electrically connected to the control unit, and the temperature sensing unit senses a biological body temperature and an ambient temperature. The humidity sensing unit is electrically connected to the control unit, and the humidity sensing unit senses a biological body humidity and an ambient humidity. When the biological body temperature is less than a first temperature setting value or the ambient temperature is less than a second temperature setting value, the control unit is configured to control the heating unit to continuously heat; when the biological body temperature is not less than the first temperature setting value and the ambient temperature is not less than the second temperature setting value, the control unit is configured to control the heating unit to stop heating; when the biological body humidity is less than a humidity setting value or the ambient humidity is less than the humidity setting value, the control unit is configured to control the heating unit to stop heating; when the biological body humidity is not less than the humidity setting value and the ambient humidity is not less than the humidity setting value, the control unit is configured to control the heating unit to continuously heat.

In one embodiment, the control unit is a microcontroller.

According to the invention, the explosion-proof power supply unit includes a separable explosion-proof chargeable battery and a high specific-heat cladding layer. The high specific-heat cladding layer is arranged at one side of the separable explosion-proof chargeable battery, and arranged at one side of the heating unit.

In one embodiment, the high specific-heat cladding layer is a ceramic yarn or a nylon yarn.

In one embodiment, the power management unit includes a charging circuit. The charging circuit charges the explosion-proof power supply unit by an external power through the power management unit.

According to the invention, the heating unit is a heating layer, and the heating layer is a woven wire cloth composed of iron, steel, or copper materials, polyimide film electric heating piece, or ceramic heating piece positive temperature coefficient.

In one embodiment, the display unit is an LCD display screen or an LED display screen.

In one embodiment, the input unit includes a touch switch, a time switch, and a temperature switch.

In one embodiment, the temperature sensing unit includes a biological body temperature sensor and an ambient temperature sensor.

In one embodiment, the humidity sensing unit includes a biological body humidity sensor and an ambient humidity sensor.

In one embodiment, the first temperature setting value is 30 degrees.

In one embodiment, the second temperature setting value is 15 degrees.

In one embodiment, the humidity setting value is 60%.

According to the invention the explosion-proof chargeable battery, the high specific-heat cladding layer, and the heating unit are arranged in stack inside an inner layer of the wearable body; the control unit, the power management unit, the display unit, the input unit, the temperature sensing unit, and the humidity sensing unit of the energy-saving heating wearable apparatus are integrated on a flexible printed circuit board; the flexible printed circuit board is installed inside the inner layer of the wearable body, and the temperature sensing unit and the humidity sensing unit are exposed to the ambient environment and the biological body.

In one embodiment, the flexible printed circuit board further provides a USB connector; the USB connector is electrically connected to the circuit board and the power management unit, and the USB connector has a USB adaptor and an extended transmission line, and the USB adaptor is connected at an end terminal of the extended transmission line; the USB connector is externally connected with a charger adapter.

In one embodiment, the energy-saving heating wearable apparatus further includes a wireless communication unit. The a wireless communication unit is electrically connected to the control unit, and the wireless communication unit is externally communicated with a wireless communication apparatus and downloads climate prediction information and provides the climate prediction information to the control unit for determining temperature controls.

In one embodiment, the wireless communication unit is externally coupled to a wireless control light unit and is configured to perform a light activation mode; the input unit is provided to be a switch for controls.

It is to be understood that both the foregoing general description and the following detailed description are exemplary, and are intended to provide further explanation of the present invention as claimed. Other advantages and features of the present invention will be apparent from the following description, drawings and claims.

### BRIEF DESCRIPTION OF DRAWING

The present invention can be more fully understood by reading the following detailed description of the embodiment, with reference made to the accompanying drawings as follows:
FIG. 1 shows a schematic circuit block diagram of an energy-saving heating wearable apparatus according to the present invention.
FIG. 2 shows a schematic control diagram of the energy-saving heating wearable apparatus activated at initiation according to the present invention.
FIG. 3 shows a flowchart of automatic heating controls for the energy-saving heating wearable apparatus according to the present invention.
FIG. 4 shows a schematic view of using the energy-saving heating wearable apparatus according to the present invention.
FIG. 5 shows a schematic partial side view in FIG. 4.

### DETAILED DESCRIPTION

Reference will now be made to the drawing figures to describe the present invention in detail. It will be understood that the drawing figures and exemplified embodiments of present invention are not limited to the details thereof.

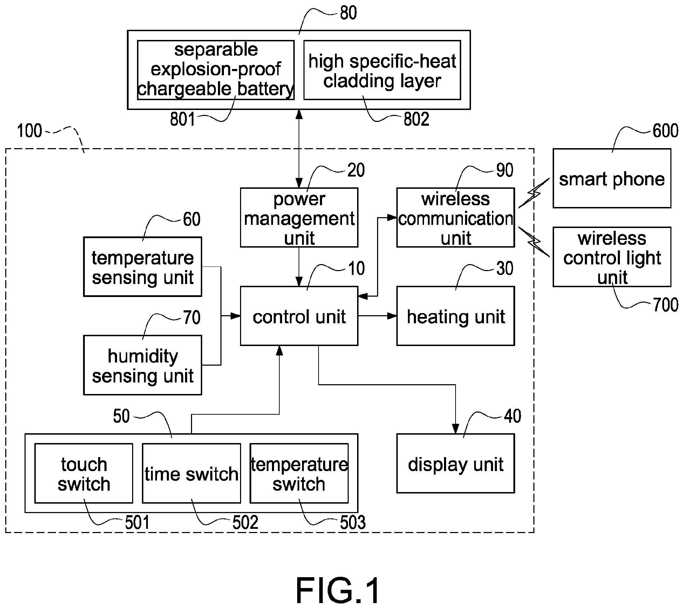

Refer to FIG. 1, which shows a schematic circuit block diagram of an energy-saving heating wearable apparatus according to the present invention. The energy-saving heating wearable apparatus 100 includes a control unit 10, a power management unit 20, a heating unit 30, a display unit 40, an input unit 50, a temperature sensing unit 60, a humidity sensing unit 70, an explosion-proof power supply unit 80, and a wireless communication unit 90. The temperature sensing unit 60 is provided to sense a biological body temperature and an ambient temperature. The humidity sensing unit 70 is provided to sense a biological body humidity and an ambient humidity. The control unit 10 determines whether the heating unit 30 needs to be activated to heat according to the sensed biological body temperature, ambient temperature, biological body humidity, and ambient humidity. If the biological body temperature or the ambient temperature is less than a temperature setting value, or the biological body humidity or the ambient humidity is not less than a humidity setting value, the control unit 10 controls the heating unit 30 to continuously heat.

The control unit 10 stores an application program for determining the sensed biological body temperature, ambient temperature, biological body humidity, and ambient humidity. In this embodiment, the control unit 10 is a microcontroller.

The power management unit 20 is electrically connected to the control unit 10 and the explosion-proof power supply unit 80 to provide a power management for the explosion-proof power supply unit 80, and provide the required power for the energy-saving heating wearable apparatus 100 and the heating unit 30. In this embodiment, the power management unit 20 includes a charging circuit (not shown) to charge a separable explosion-proof chargeable battery 801 of the explosion-proof power supply unit 80.

The heating unit 30 is electrically connected to the control unit 10 and the power management unit 20, and the control unit 10 activates the heating unit 30 to heat. In this embodiment, the heating unit 30 is a heating layer, and the heating layer is, for example but not limited to, a woven wire cloth composed of iron, steel, or copper materials, polyimide film electric heating piece, or ceramic heating piece positive temperature coefficient. The heating unit 30 is electrically connected to the power management unit 20 and attached on an inner layer of a wearable body (not shown).

The display unit 40 is electrically connected to the control unit 10 for displaying activation states, such as quantity of electricity, temperature, setting time, or so on. In this embodiment, the display unit 40 is an LCD or LED display screen.

The input unit 50 is electrically connected to the control unit 10 for providing operation signals to the control unit 10 so that the control unit 10 controls the energy-saving heating wearable apparatus 100 in activation (power on), time setting, temperature setting, power off. In this embodiment, the input unit 50 includes a touch switch (or touch button) 501, a time switch 502, and a temperature switch 503. The touch switch 501 is touched to power on and power off the energy-saving heating wearable apparatus 100. After the time switch 502 is turned on, the energy-saving heating wearable apparatus 100 is operated for a setting time, such as 0.5 hours, 1 hour, or 2 hours. After the temperature switch 503 is turned on, the heating unit 30 is controlled in a constant temperature state by the control unit 10.

The temperature sensing unit 60 is electrically connected to the control unit 10 to sense a biological body temperature and an ambient temperature. The biological body temperature and the ambient temperature sensed by the temperature sensing unit 60 are transmitted to the control unit 10 so as to determine whether the control unit 10 should activate the heating unit 30 or not. In this embodiment, the temperature sensing unit 60 includes a biological body temperature sensor and an ambient temperature sensor.

The humidity sensing unit 70 is electrically connected to the control unit 10 to sense a biological body humidity and an ambient humidity. The biological body humidity and the ambient humidity sensed by the humidity sensing unit 70 are transmitted to the control unit 10 so as to determine whether the control unit 10 should activate the heating unit 30 or not. In this embodiment, the humidity sensing unit 70 includes a biological body humidity sensor and an ambient humidity sensor.

The explosion-proof power supply unit 80 is electrically connected to the power management unit 20. The explosion-proof power supply unit 80 includes a separable explosion-proof chargeable battery 801 and a high specific-heat cladding layer 802 arranged at one side of the separable explosion-proof chargeable battery 801. The high specific-heat cladding layer 802 is further arranged at one side of the heating unit 30 and is used to be a regenerative chamber to absorb radiant heat generated from the heating unit 30 so that the wearable body has advantages of reduced installation space, simple assembly manner, reduced power consumption, high save energy, and concentrated heat source. In this embodiment, the high specific-heat cladding layer 802 is a ceramic yarn or a nylon yarn. The specific heat of the ceramic yarn is approximately 840 J/(kg·K) and the specific heat of the nylon yarn is approximately 1700 J/(kg·K) so that the ceramic yarn and the nylon yarn are continuously heated to emit radiant heat.

The wireless communication unit 90 is electrically connected to the control unit 10 and communicates with an external wireless communication apparatus, such as a smart phone 600 or a wireless control light unit 700. External climate prediction information stored in a cloud server can be downloaded by the smart phone 600 to be utilized for determining temperature controls by the control unit 10. In addition, the wireless communication unit 90 is communicated with the wireless control light unit 700 to perform a light activation mode so that the input unit 50 with buttons or switches of a glove (not shown) is used for controls of a directional light.

At the activated initiation of circuits of the energy-saving heating wearable apparatus 100, the temperature of the separable explosion-proof chargeable battery 801 is low so that the control unit 10 activates the heating unit 30 to directly heat the biological body and simultaneously heat the high specific-heat cladding layer 802.

When the circuits is activated for a period of time, the high specific-heat cladding layer 802 is heated to a high temperature to emit radiant heat. Also, the emitted radiant heat is provided to heat the biological body again to raise the temperature of the biological body. When the biological body temperature is greater than a predetermined temperature value, the control unit 10 controls the heating unit 30 to stop heating. At this time, the biological body temperature is maintained by the radiant heat emitted from the high specific-heat cladding layer 802 to achieve energy conservation.

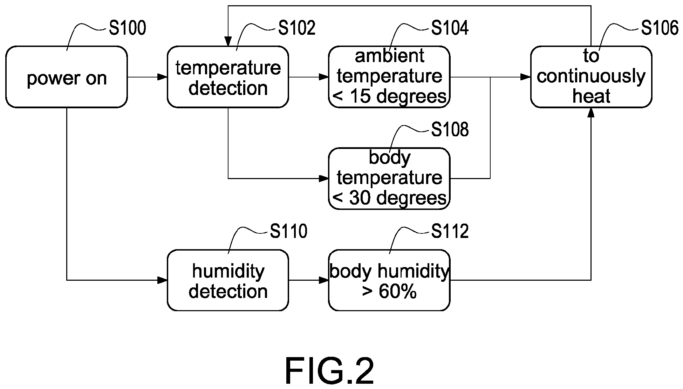

Refer to FIG. 2, which shows a schematic control diagram of the energy-saving heating wearable apparatus activated at initiation according to the present invention. With reference also to FIG. 1, in step S100, a power source is turned on. The input unit 50 is operated to provide a signal to the control unit 10 so that the power management unit 20 supplied the power source to units of the energy-saving heating wearable apparatus 100.

In step S102, a biological body temperature and an ambient temperature are detected. The control unit 10 activates a temperature sensing unit 60 to sense the biological body temperature and the ambient temperature. In this embodiment, the biological body temperature may be a temperature of the user's hand, foot, face, body, or neck.

In step S104, it is to determine whether an ambient temperature is less than 15 degrees. The ambient temperature detected by the temperature sensing unit 60 is transmitted to the control unit 10. When the control unit 10 detects that the ambient temperature is less than 15 degrees, step S106 is performed.

In step S106, it is to continuously heat. When the ambient temperature detected by the temperature sensing unit 60 is less than 15 degrees, the control unit 10 controls the heating unit 30 to continuously heat.

In step S108, it is to determine whether a biological body temperature is less than 30 degrees. The biological body temperature detected by the temperature sensing unit 60 is transmitted to the control unit 10. When the control unit 10 detects that the biological body temperature is less than 30 degrees, step S106 is performed to continuously heat.

In step S110, a biological body humidity is detected. After the power source is turned on, the biological body humidity is simultaneously determined by the humidity sensing unit 70, and then step S112 is performed.

In step S112, it is to determine whether the biological body humidity is greater than 60%. When the humidity sensing unit 70 detects that the biological body humidity is greater than 60%, step S106 is performed.

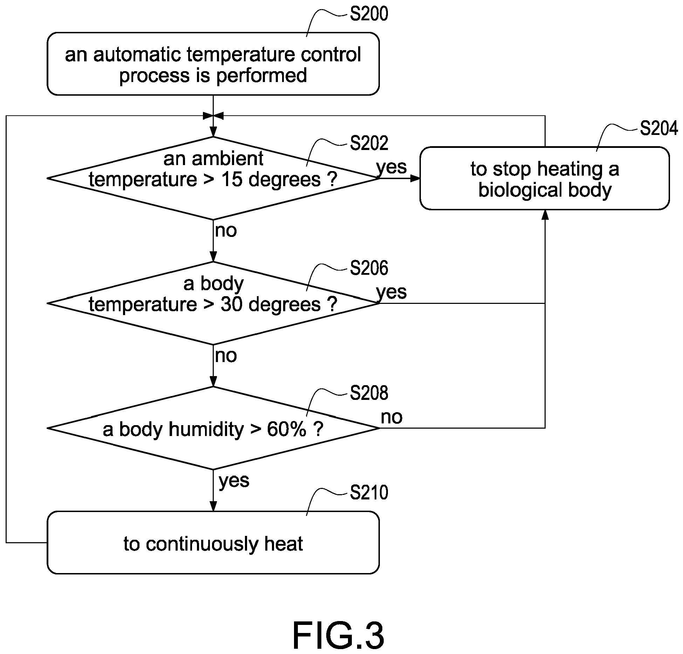

Refer to FIG. 3, which shows a flowchart of automatic heating controls for the energy-saving heating wearable apparatus according to the present invention. With reference also to FIG. 1, in step S200, an automatic temperature control process is performed. The temperature sensing unit 60 and the humidity sensing unit 70 are used for a temperature detection and a humidity detection, respectively.

In step S202, it is to determine whether the ambient temperature is greater than 15 degrees. When the control unit 10 determines that the ambient temperature detected by the temperature sensing unit 60 is greater than 15 degrees, step S204 is performed to stop heating the biological body so that the control unit 10 turns off the heating unit 30. In step S202, when the control unit 10 determines that the ambient temperature is not greater than 15 degrees, step S206 is performed.

In step S206, it is to determine whether the biological body temperature is greater than 30 degrees. When the control unit 10 determines that the biological body temperature detected by the temperature sensing unit 60 is greater than 30 degrees, step S204 is performed to stop heating the biological body so that the control unit 10 turns off the heating unit 30. At this time, the biological body temperature is maintained by the radiant heat emitted from the high specific-heat cladding layer 802 to achieve energy conservation. In this embodiment, the biological body temperature may be a temperature of the user's hand, foot, face, body, or neck. In step S206, when the control unit 10 determines that the biological body temperature is not greater than 30 degrees, step S208 is performed.

In step S208, it is to determine whether the biological body humidity is greater than 60%. When the control unit 10 determines that the biological body humidity detected by the humidity sensing unit 70 is greater than 60%, step S210 is performed to control the heating unit 30 continuously to heat by the control unit 10. In this embodiment, the biological body humidity may be a humidity of the user's hand, foot, face, body, or neck. In step S208, when the control unit 10 determines that the biological body humidity is not greater than 60%, step S204 is performed to stop heating the biological bod.

In step S210, it is to continuously heat. When the detected ambient temperature in step S202 is not greater than 15 degrees, the detected biological body temperature in step S206 is not greater than 30 degrees, or the detected biological body humidity in step S208 is greater than 60%, the control unit 10 continuously activates the heating unit 30 to heat.

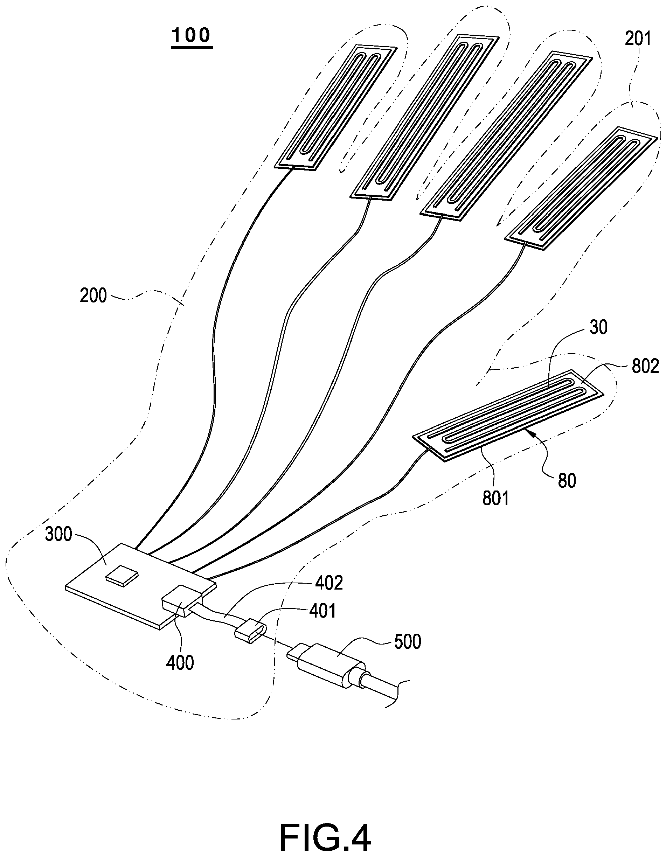

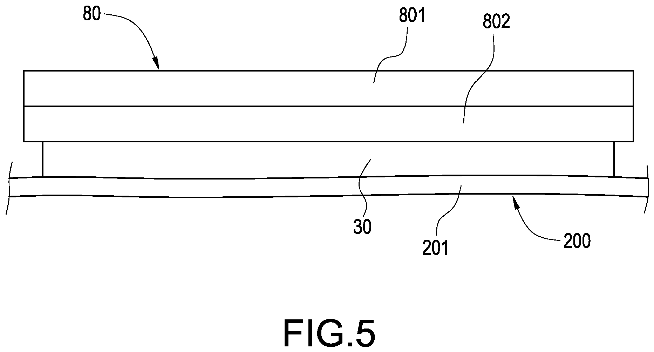

Refer to FIG. 4 and FIG. 5, which show a schematic view of using the energy-saving heating wearable apparatus according to the present invention and a schematic partial side view in FIG. 4, respectively. With reference also to FIG. 1, the separable explosion-proof chargeable battery 801, the high specific-heat cladding layer 802, and the heating unit 30 are arranged in stack inside an inner layer 201 of a wearable body 200, such as a glove. In addition, the control unit 10, the power management unit 20, the display unit 40, the input unit 50, the temperature sensing unit 60, and the humidity sensing unit 70 of the energy-saving heating wearable apparatus 100 shown in FIG. 1 are integrated on a circuit board 300, such as a flexible printed circuit board. The circuit board 300 is installed inside the inner layer 201 of the wearable body 200. The temperature sensing unit 60 and the humidity sensing unit 70 are exposed to the ambient environment and the biological body.

In addition, a USB connector 400 is electrically connected to the circuit board 300 and the power management unit 20. The USB connector 400 has a USB adaptor 401 and an extended transmission line 402, and the USB adaptor 401 is connected at an end terminal of the extended transmission line 402. The USB connector 400 is used to externally connect with a charger adapter 500 so that an external power can charge the separable explosion-proof chargeable battery 801 through the power management unit 20.

At the activated initiation of circuits of the energy-saving heating wearable apparatus 100, the temperature of the separable explosion-proof chargeable battery 801 is low so that the control unit 10 activates the heating unit 30 to directly heat the biological body and simultaneously heat the high specific-heat cladding layer 802.

When the circuits is activated for a period of time, the high specific-heat cladding layer 802 is heated to a high temperature to emit radiant heat. Also, the emitted radiant heat is provided to heat the biological body again to raise the temperature of the biological body. When the biological body temperature is greater than a predetermined temperature value, the control unit 10 controls the heating unit 30 to stop heating. At this time, the biological body temperature is maintained by the radiant heat emitted from the high specific-heat cladding layer 802 to achieve energy conservation.

At the activated initiation of circuits of the energy-saving heating wearable apparatus 100, the temperature of the separable explosion-proof chargeable battery 801 is low so that the control unit 10 activates the heating unit 30 to directly heat the biological body and simultaneously heat the high specific-heat cladding layer 802.

When the circuits is activated for a period of time, the high specific-heat cladding layer 802 is heated to a high temperature to emit radiant heat. Also, the emitted radiant heat is provided to heat the biological body again to raise the temperature of the biological body. When the biological body temperature is greater than a predetermined temperature value, the control unit 10 controls the heating unit 30 to stop heating. At this time, the biological body temperature is maintained by the radiant heat emitted from the high specific-heat cladding layer 802 to achieve energy conservation.

The wireless communication unit 90 is communicated with an external wireless communication apparatus, such as the smart phone 600 or the wireless control light unit 700. External climate prediction information stored in a cloud server can be downloaded by the smart phone 600 to be utilized for determining temperature controls by the control unit 10. In addition, the wireless communication unit 90 is communicated with the wireless control light unit 700 to perform a light activation mode so that the input unit 50 with buttons or switches of the wearable body 200 is used for controls of a directional light.

## Claims

1. An energy-saving heating wearable apparatus (100), in combination with a wearable body (200), **characterized in that** the energy-saving heating wearable apparatus (100) comprising:
a control unit (10) configured to store an application program for temperature and humidity determinations;
a power supply unit (80) configured to provide the required power to the energy-saving heating wearable apparatus (100);
a power management unit (20) electrically connected to the control unit (10) and the explosion-proof power supply unit (80), and the power management unit (20) configured to manage the power of the explosion-proof power supply unit (80);
a heating unit (30) electrically connected to the control unit (10) and the power management unit (20);
a display unit (40) electrically connected to the control unit (10), and the display unit (40) configured to display control states of the energy-saving heating wearable apparatus (100);
an input unit (50) electrically connected to the control unit (10), and the input unit (50) configured to provide operation signals to the control unit (10);
a temperature sensing unit (60) electrically connected to the control unit (10), and the temperature sensing unit (60) configured to sense a biological body temperature and an ambient temperature; and
a humidity sensing unit (70) electrically connected to the control unit (10), and the humidity sensing unit (70) configured to sense a biological body humidity and an ambient humidity;
**characterised in that** the power supply unit (80) is an explosion-proof power supply unit and comprises:
a separable plate-shaped explosion-proof chargeable battery (801); and
a high specific-heat plate-shaped cladding layer (802) arranged at one side of the separable explosion-proof chargeable battery (801), and arranged at one side of the heating unit (30) which is a heating layer;
wherein the plate-shaped separable explosion-proof chargeable battery (801), the high specific-heat plate-shaped cladding layer (802), and the heating unit (30) are arranged in stack inside an inner layer (201) of the wearable body (200); the inner layer (201) is corresponding to user finger portion;
wherein when the biological body temperature is less than a first temperature setting value or the ambient temperature is less than a second temperature setting value, the control unit (10) is configured to control the heating unit (30) to continuously heat; when the biological body temperature is not less than the first temperature setting value and the ambient temperature is not less than the second temperature setting value, the control unit (10) is configured to control the heating unit (30) to stop heating; when the biological body humidity is less than a humidity setting value or the ambient humidity is less than the humidity setting value, the control unit (10) is configured to control the heating unit (30) to stop heating; when the biological body humidity is not less than the humidity setting value and the ambient humidity is not less than the humidity setting value, the control unit (10) is configured to control the heating unit (30) to continuously heat.

2. The combination according to claim 1, wherein the control unit (10) is a microcontroller.

3. The combination according to claim 1, wherein the high specific-heat cladding layer (802) is a ceramic yarn or a nylon yarn.

4. The combination according to claim 1, wherein the power management unit (20) comprises:
a charging circuit configured to charge the explosion-proof power supply unit (80) by an external power through the power management unit (20).

5. The combination according to claim 1, wherein the heating unit (30) is a heating layer, and the heating layer is a woven wire cloth composed of iron, steel, or copper materials, polyimide film electric heating piece, or ceramic heating piece positive temperature coefficient.

6. The combination according to claim 1, wherein the display unit (40) is an LCD display screen or an LED display screen.

7. The combination according to claim 1, wherein the input unit (50) comprises a touch switch, a time switch, and a temperature switch.

8. The combination according to claim 1, wherein the temperature sensing unit (60) comprises a biological body temperature sensor and an ambient temperature sensor.

9. The combination according to claim 1, wherein the humidity sensing unit (70) comprises a biological body humidity sensor and an ambient humidity sensor.

10. The combination according to claim 1, wherein the first temperature setting value is 30 degrees.

11. The combination according to claim 1, wherein the second temperature setting value is 15 degrees.

12. The combination according to claim 1, wherein the humidity setting value is 60%,

13. The combination according to claim 1, the power management unit (20), the display unit (40), the input unit (50), the temperature sensing unit (60), and the humidity sensing unit (70) of the energy-saving heating wearable apparatus (100) are integrated on a flexible printed circuit board; the flexible printed circuit board is installed inside the inner layer (201) of the wearable body (200), and the temperature sensing unit (60) and the humidity sensing unit (70) are exposed to the ambient environment and the biological body.

14. The combination according to claim 13, wherein the flexible printed circuit board further provides a USB connector (400); the USB connector (400) is electrically connected to the flexible printed circuit board and the power management unit (20), and the USB connector (400) has a USB adaptor (401) and an extended transmission line (402), and the USB adaptor (401) is connected at an end terminal of the extended transmission line (402); the USB connector (400) is externally connected with a charger adapter.

15. The combination according to claim 1, further comprising:
a wireless communication unit (90) electrically connected to the control unit (10), and the wireless communication unit (90) externally communicated with a wireless communication apparatus and configured to download climate prediction information and provide the climate prediction information to the control unit (10) for determining temperature controls.

16. The combination according to claim 15, wherein the wireless communication unit (90) is externally coupled to a wireless control light unit (700) and is configured to perform a light activation mode; the input unit (50) is provided to be a switch for controls.

## Patentansprüche

1. Energiesparende, heizende, tragbare Vorrichtung (100) in Kombination mit einem tragbaren Kleidungsstück (200), **dadurch gekennzeichnet, dass** die energiesparende, heizende, tragbare Vorrichtung (100) umfasst:
eine Steuerungseinheit (10), die konfiguriert ist, um ein Anwendungsprogramm für Temperatur- und Feuchtigkeitsbestimmungen zu speichern;
eine Stromversorgungseinheit (80), die konfiguriert ist, um den erforderlichen Strom für die energiesparende, heizende, tragbare Vorrichtung (100) bereitzustellen;
eine Stromverwaltungseinheit (20), die elektrisch mit der Steuerungseinheit (10) und der explosions-geschützten Stromversorgungseinheit (80) verbunden ist, wobei die Stromverwaltungseinheit (20) konfiguriert ist, um den Strom der explosions-geschützten Stromversorgungseinheit (80) zu verwalten;
eine Heizeinheit (30), die elektrisch mit der Steuerungseinheit (10) und der Stromverwaltungseinheit (20) verbunden ist;
eine Anzeigeeinheit (40), die elektrisch mit der Steuerungseinheit (10) verbunden ist, und wobei die Anzeigeeinheit (40) konfiguriert ist, um Steuerungszustände der energiesparenden, heizenden, tragbaren Vorrichtung (100) anzuzeigen;
eine Eingabeeinheit (50), die elektrisch mit der Steuerungseinheit (10) verbunden ist, und wobei die Eingabeeinheit (50) konfiguriert ist, um Betriebssignale an die Steuerungseinheit (10) zu liefern;
eine Temperaturerfassungseinheit (60), die elektrisch mit der Steuerungseinheit (10) verbunden ist, und wobei die Temperaturerfassungseinheit (60) konfiguriert ist, um eine biologische Körpertemperatur und eine Umgebungstemperatur zu erfassen; und
eine Feuchtigkeitserfassungseinheit (70), die elektrisch mit der Steuerungseinheit (10) verbunden ist, und wobei die Feuchtigkeitserfassungseinheit (70) konfiguriert ist, um eine biologische Körperfeuchtigkeit und eine Umgebungsfeuchtigkeit zu erfassen;
**dadurch gekennzeichnet, dass**
die Stromversorgungseinheit (80) eine explosions-geschützte Stromversorgungseinheit ist und aufweist:
eine separierbare, plattenförmige, explosions-geschützte, aufladbare Batterie (801); und
eine für hoch-spezifische Hitze geeignete plattenförmige Verkleidungsschicht (802), die auf einer Seite der separierbaren, explosions-geschützten, aufladbaren Batterie (801) und auf einer Seite der Heizeinheit (30) angeordnet ist, die eine Heizschicht ist;
wobei die plattenförmige, separierbare, explosions-geschützte, aufladbare Batterie (801), die für hoch-spezifische Hitze geeignete plattenförmige Verkleidungsschicht (802) und die Heizeinheit (30) in einem Stapel innerhalb einer inneren Schicht (201) des tragbaren Kleidungsstücks (200) angeordnet sind; wobei die innere Schicht (201) dem Fingerabschnitt des Benutzers angepasst ist;
wobei, wenn die biologische Körpertemperatur niedriger als ein erster Temperatur-Einstellwert oder die Umgebungstemperatur niedriger als ein zweiter Temperatur-Einstellwert ist, die Steuerungseinheit (10) konfiguriert ist, um die Heizeinheit (30) anzusteuern, dass sie kontinuierlich heizt; wenn die biologische Körpertemperatur nicht niedriger als der erste Temperatur-Einstellwert ist und die Umgebungstemperatur nicht niedriger als der zweite Temperatur-Einstellwert ist, die Steuerungseinheit (10) konfiguriert ist, um die Heizeinheit (30) anzusteuern, dass sie das Heizen stoppt; wenn die biologische Körperfeuchtigkeit niedriger als ein Feuchtigkeits-Einstellwert oder die Umgebungsfeuchtigkeit niedriger als der Feuchtigkeits-Einstellwert ist, die Steuerungseinheit (10) konfiguriert, um die Heizeinheit (30) anzusteuern, dass sie das Heizen stoppt; wenn die biologische Körperfeuchtigkeit nicht niedriger als der Feuchtigkeits-Einstellwert und die Umgebungsfeuchtigkeit nicht niedriger als der Feuchtigkeits-Einstellwert ist, die Steuerungseinheit (10) konfiguriert, um die Heizeinheit (30) anzusteuern, dass sie kontinuierlich heizt.

2. Kombination nach Anspruch 1, wobei die Steuerungseinheit (10) ein Mikrocontroller ist.

3. Kombination nach Anspruch 1, wobei die für hoch-spezifische Hitze geeignete Verkleidungsschicht (802) aus einem Keramikgarn oder einem Nylongarn besteht.

4. Kombination nach Anspruch 1, wobei die Stromverwaltungseinheit (20) umfasst:
eine Ladeschaltung, die konfiguriert ist, um die explosions-geschützte Stromversorgungseinheit (80) durch eine externe Stromquelle über die Stromverwaltungseinheit (20) aufzuladen.

5. Kombination nach Anspruch 1, wobei die Heizeinheit (30) eine Heizschicht ist und die Heizschicht ein Drahtgewebe aus Eisen-, Stahl- oder Kupfermaterialien, ein elektrisches Polyimidfilm-Heizelement oder ein keramisches Heizelement mit positivem Temperaturkoeffizienten ist.

6. Kombination nach Anspruch 1, wobei die Anzeigeeinheit (40) ein LCD-Bildschirm oder ein LED-Bildschirm ist.

7. Kombination nach Anspruch 1, wobei die Eingabeeinheit (50) einen Berührungsschalter, einen Zeitschalter und einen Temperaturschalter umfasst.

8. Kombination nach Anspruch 1, wobei die Temperaturerfassungseinheit (60) einen biologischen Körpertemperatursensor und einen Umgebungstemperatursensor umfasst.

9. Kombination nach Anspruch 1, wobei die Feuchtigkeitserfassungseinheit (70) einen biologischen Körperfeuchtigkeitssensor und einen Umgebungsfeuchtigkeitssensor umfasst.

10. Kombination nach Anspruch 1, wobei der erste Temperatur-Einstellwert 30 Grad beträgt.

11. Kombination nach Anspruch 1, wobei der zweite Temperatur-Einstellwert 15 Grad beträgt.

12. Kombination nach Anspruch 1, wobei der Feuchtigkeits-Einstellwert 60% beträgt.

13. Kombination nach Anspruch 1, wobei die Stromverwaltungseinheit (20), die Anzeigeeinheit (40), die Eingabeeinheit (50), die Temperaturerfassungseinheit (60) und die Feuchtigkeitserfassungseinheit (70) der energiesparenden, heizbaren, tragbaren Vorrichtung (100) auf einer flexiblen Leiterplatte integriert sind; wobei die flexible Leiterplatte innerhalb der inneren Schicht (201) des tragbaren Kleidungsstücks (200) installiert ist, und wobei die Temperaturerfassungseinheit (60) und die Feuchtigkeitserfassungseinheit (70) der Außenumgebung und dem biologischen Körper ausgesetzt sind.

14. Kombination nach Anspruch 13, wobei die flexible Leiterplatte ferner einen USB-Anschluss (400) aufweist; wobei der USB- Anschluss (400) elektrisch mit der flexiblen Leiterplatte und der Stromverwaltungseinheit (20) verbunden ist, und der USB- Anschluss (400) einen USB-Adapter (401) und eine erweiterte Übertragungsleitung (402) aufweist, und der USB-Adapter (401) an einen Endanschluss der erweiterten Übertragungsleitung (402) angeschlossen ist; wobei der USB- Anschluss (400) extern mit einem Ladeadapter verbunden ist.

15. Kombination nach Anspruch 1, ferner umfassend:
eine drahtlose Kommunikationseinheit (90), die elektrisch mit der Steuerungseinheit (10) verbunden ist, und wobei die drahtlose Kommunikationseinheit (90) extern mit einer drahtlosen Kommunikationsvorrichtung kommuniziert und konfiguriert ist, um Klimaprognoseinformationen herunterzuladen und die Klimaprognoseinformationen an die Steuerungseinheit (10) zu liefern, um Temperatursteuerungen zu bestimmen.

16. Kombination nach Anspruch 15, wobei die drahtlose Kommunikationseinheit (90) extern mit einer drahtlosen Steuerungslichteinheit (700) gekoppelt und konfiguriert ist, um einen Licht-Aktivierungsmodus auszuführen; wobei die Eingabeeinheit (50) als Schalter für Steuerungen vorgesehen ist.

## Revendications

1. Un dispositif portable de chauffage à économie d'énergie (100), en **combinaison** avec un corps vestimentaire (200), **caractérisé en ce que** le dispositif portable de chauffage à économie d'énergie (100) comprend:
une unité de commande (10) configurée pour stocker un programme d'application pour les déterminations de température et d'humidité;
une unité d'alimentation électrique (80) configurée pour fournir le courant requise au dispositif portable de chauffage à économie d'énergie (100);
une unité de gestion du courant (20) connectée électriquement à l'unité de commande (10) et à l'unité d'alimentation électrique (80) antidéflagrante, et l'unité de gestion du courant (20) configurée pour gérer l'énergie de l'unité d'alimentation électrique (80) antidéflagrante;
une unité de chauffage (30) connectée électriquement à l'unité de commande (10) et à l'unité de gestion du courant (20);
une unité d'affichage (40) connectée électriquement à l'unité de commande (10), et l'unité d'affichage (40) configurée pour afficher les états de commande de l'dispositif portable de chauffage à économie d'énergie (100);
une unité d'entrée (50) connectée électriquement à l'unité de commande (10), et l'unité d'entrée (50) configurée pour fournir des signaux de fonctionnement à l'unité de commande (10);
une unité de détection de température (60) connectée électriquement à l'unité de commande (10), et l'unité de détection de température (60) configurée pour détecter une température biologique du corps et une température ambiante; et
une unité de détection d'humidité (70) connectée électriquement à l'unité de commande (10), et l'unité de détection d'humidité (70) configurée pour détecter une humidité biologique du corps et une humidité ambiante;
**caractérisé en ce que**
l'unité d'alimentation électrique (80) est une unité d'alimentation électrique antidéflagrant et comprend:
une batterie rechargeable antidéflagrante en plate-forme séparable (801); et
une couche de revêtement (802) en plate-forme adaptée à une chaleur spécifique élevée et disposée sur un côté de la batterie rechargeable antidéflagrante en plate-forme séparable (801), et disposée sur un côté de l'unité de chauffage (30) qui est une couche chauffante;
dans lequel la batterie rechargeable antidéflagrante en plate-forme séparable (801), la couche de revêtement (802) en plate-forme adaptée à une chaleur spécifique élevée et l'unité de chauffage (30) sont disposées en pile à l'intérieur d'une couche intérieure (201) du corps vestimentaire (200); la couche intérieure (201) correspond à la partie du doigt de l'utilisateur;
dans lequel lorsque la température du corps biologique est inférieure à une première valeur de réglage de la température ou lorsque la température ambiante est inférieure à une deuxième valeur de réglage de la température, l'unité de commande (10) est configurée pour commander l'unité de chauffage (30) pour qu'elle chauffe en continu; lorsque la température du corps biologique n'est pas inférieure à la première valeur de réglage de la température et lorsque la température ambiante n'est pas inférieure à la deuxième valeur de réglage de la température, l'unité de commande (10) est configurée pour commander l'unité de chauffage (30) pour qu'elle arrête le chauffage; lorsque l'humidité du corps biologique est inférieure à une valeur de réglage de l'humidité ou lorsque l'humidité ambiante est inférieure à la valeur de réglage de l'humidité, l'unité de commande (10) est configurée pour commander l'unité de chauffage (30) pour qu'elle arrête le chauffage; lorsque l'humidité du corps biologique n'est pas inférieure à la valeur de réglage de l'humidité et lorsque l'humidité ambiante n'est pas inférieure à la valeur de réglage de l'humidité, l'unité de commande (10) est configurée pour commander l'unité de chauffage (30) pour qu'elle chauffe en continu.

2. La combinaison selon la revendication 1, dans laquelle l'unité de commande (10) est un microcontrôleur.

3. La combinaison selon la revendication 1, dans laquelle la couche de revêtement (802) en plate-forme adaptée à une chaleur spécifique élevée est constituée d'un fil de céramique ou d'un fil de nylon.

4. La combinaison selon la revendication 1, dans laquelle l'unité de gestion du courant (20) comprend:
un circuit de charge configuré pour charger l'unité d'alimentation électrique (80) antidéflagrante par une source d'énergie externe via l'unité de gestion du courant (20).

5. La combinaison selon la revendication 1, dans laquelle l'unité de chauffage (30) est une couche chauffante et la couche chauffante est un treillis métallique en fer, en acier ou en cuivre, un élément chauffant à film électrique en polyimide ou un élément chauffant en céramique à coefficient de température positif.

6. La combinaison selon la revendication 1, dans laquelle l'unité d'affichage (40) est un écran d'affichage LCD ou un écran d'affichage LED.

7. La combinaison selon la revendication 1, dans laquelle l'unité d'entrée (50) comprend un interrupteur tactile, un interrupteur horaire et un interrupteur de température.

8. La combinaison selon la revendication 1, dans laquelle l'unité de détection de température (60) comprend un capteur de température biologique du corps et un capteur de température ambiante.

9. La combinaison selon la revendication 1, dans laquelle l'unité de détection d'humidité (70) comprend un capteur d'humidité biologique du corps et un capteur d'humidité ambiante.

10. La combinaison selon la revendication 1, dans laquelle la première valeur de réglage de la température est de 30 degrés.

11. La combinaison selon la revendication 1, dans laquelle la deuxième valeur de réglage de la température est de 15 degrés.

12. La combinaison selon la revendication 1, dans laquelle la valeur de réglage de l'humidité est de 60 %.

13. La combinaison selon la revendication 1, dans laquelle l'unité de gestion du courant (20), l'unité d'affichage (40), l'unité d'entrée (50), l'unité de détection de la température (60) et l'unité de détection de l'humidité (70) de l'dispositif portable de chauffage à économie d'énergie (100) sont intégrées sur une carte de circuit imprimé flexible; la carte de circuit imprimé flexible est installée à l'intérieur de la couche interne (201) du corps vestimentaire (200), et l'unité de détection de la température (60) et l'unité de détection de l'humidité (70) sont exposées à l'environnement ambiant et au corps biologique.

14. La combinaison selon la revendication 13, dans laquelle la carte de circuit imprimé flexible fournit en outre un connecteur USB (400); le connecteur USB (400) est connecté électriquement à la carte de circuit imprimé flexible et à l'unité de gestion du courant (20), et le connecteur USB (400) a un adaptateur USB (401) et une ligne de transmission étendue (402), et l'adaptateur USB (401) est connecté à une borne d'extrémité de la ligne de transmission étendue (402); le connecteur USB (400) est connecté extérieurement à un adaptateur de chargeur.

15. La combinaison selon la revendication 1, comprenant en outre:
une unité de communication sans fil (90) connectée électriquement à l'unité de commande (10), et l'unité de communication sans fil (90) communiquant extérieurement avec un dispositif de communication sans fil et configurée pour télécharger des informations de prévision climatique et fournir les informations de prévision climatique à l'unité de commande (10) pour déterminer les contrôles de température.

16. La combinaison selon la revendication 15, dans laquelle l'unité de communication sans fil (90) est couplée de manière externe à une unité de commande sans fil d'éclairage (700) et est configurée pour effectuer un mode d'activation d'éclairage; l'unité d'entrée (50) est prévue pour être un interrupteur pour les commandes.
